# EUROPÄISCHE PATENTSCHRIFT

(11) **EP 2 033 056 B1**
(45) Veröffentlichungstag und Bekanntmachung des Hinweises auf die Patenterteilung: **30.04.2014**
(21) Anmeldenummer: 07724890.4
(22) Anmeldetag: 04.05.2007
(51) Int. Cl.: G05B 19/416

(54) **VERFAHREN ZUM STEUERN DER BEWEGUNG EINES AKTUATORS**
METHOD FOR CONTROLLING THE MOVEMENT OF AN ACTUATOR
PROCÉDÉ POUR COMMANDER LE DÉPLACEMENT D' UN ACTIONNEUR

(30) Priorität: 04.05.2006 DE 102006020998
(43) Veröffentlichungstag der Anmeldung: 11.03.2009
(73) Patentinhaber: SEW-EURODRIVE GmbH & Co. KG, 76646 Bruchsal (DE)
(72) Erfinder: KLEINOW, Thomas, 96179 Rattelsdorf (DE)
(86) Internationale Anmeldenummer: PCT/EP2007/003965
(87) Internationale Veröffentlichungsnummer: WO 2007/128525

(56) Entgegenhaltungen:
- EP-A1- 0 786 710
- US-A- 4 651 073
- US-A- 5 285 330

## Beschreibung

### Hintergrund der Erfindung

Die Erfindung betrifft ein Verfahren zum Steuern der Bewegung eines Aktuators, wie beispielsweise eines Antriebs einer Achse eines Palettierers, eines Hub- oder eines Schwenkwerkes, welcher insbesondere über eine Wegmessung gesteuert wird. Ferner betrifft die Erfindung auch eine Taktmaschine, welche mit einem Aktuator angetrieben wird. Darüber hinaus bezieht sich die Erfindung auf die Steuerung von Antrieben einzelner oder mehrerer Achsen von Robotern. Besonders vorteilhaft ist das erfindungsgemäße Verfahren im Zusammenhang mit der Steuerung derartiger Antriebe mittels einer speicherprogrammierbaren Steuerung (SPS) zu verwenden.

Aktuatoren der oben genannten Art werden in verschiedensten Arten von Maschinen und Einrichtungen, insbesondere der Fördertechnik und der Lagerhaltung verwendet. Sie dienen zum Bewegen von Paletten und Behältern sowie anderer Güter. Die Maschinen weisen oftmals auch mehrere Achsen auf, welche bevorzugt aufeinander abgestimmt bewegt werden sollen. Auch werden Maschinen bzw. deren Achsen in räumlicher Nähe verwendet, wobei die Bewegungen der einzelnen Achsen dann aufeinander abgestimmt sein sollen.

Zur Steuerung der Achsen sind als eine bewährte und betriebssichere Technik Frequenzumrichter bekannt, welche mittels einer SPS angesteuert werden. Diese Technik ermöglicht beispielsweise ein Abbremsen eines Aktuators über (insbesondere vier) vorab berechnete Umschaltpunkte oder über Wegmesspunkte, mit denen Sollwerte bis hin zu einem Stopppunkt vorgegeben werden.

Wenn bei den derart vorgegebenen Steuerzyklen jedoch beispielsweise nach einer Erstinbetriebnahme die Geschwindigkeiten erhöht werden müssen, so sind auch die Umschaltpunkte bzw. Sollwerte neu zu setzen.

Aus US-A-5 285 330 ist eine Magnetscheiben-Einrichtung bekannt, bei der der Integralwert einer Positionsinformation, die die gegenwärtige Position eines Magnetkopfes repräsentiert, von Adresscodedaten erhalten wird, die einer auf einer Scheibe gespeicherten Zylindernummer entsprechen. Der Dezimalwert der Positionsinformation wird von dem Levelwert der auf der Scheibe gespeicherten Signaldaten errechnet. Der Bewegungsgeschwindigkeitswert des Magnetkopfes und eine verbleibende Entfernung werden auf der Basis der Positionsinformation berechnet, die die erhaltenen Integral- und Dezimalwerte umfasst. Zwei Zielgeschwindigkeitswerte werden aus einer Geschwindigkeitstabelle in Abhängigkeit der verbleibenden Entfernung extrahiert und ein Mittelwert zwischen den beiden Zielgeschwindigkeitswerten annäherungsweise errechnet. Mit diesem Vorgehen soll ein genauerer Zielgeschwindigkeitswert erhalten werden, der mit der verbleibenden Entfernung korrespondiert.

### Zugrundeliegende Aufgabe

Der Erfindung liegt die Aufgabe zugrunde, ein Verfahren zum Steuern der Bewegung eines Aktuators der oben genannten Art dahingehend zu verbessern, dass die Inbetriebnahmezeiten verkürzt und dieser besser und schneller positioniert werden kann.

### Erfindungsgemäße Lösung

Diese Aufgabe ist erfindungsgemäß mit einem Verfahren gemäß Anspruch 1 gelöst. Vorteilhafte Weiterbildungen der Erfindung sind in den abhängigen Ansprüchen beschrieben.

Erfindungsgemäß wird ein Verfahren zum Steuern der Bewegung eines Aktuators mittels eines Steuerprogramms vorgeschlagen, welches die folgenden Schritte beinhaltet: Bewegen des Aktuators mit einer aktuellen Geschwindigkeit über eine aktuelle Position während einer Zeiteinheit, Ermitteln der Restwegfänge zwischen der aktuellen Position des Aktuators und einer angestrebten Position, Bewegen des Aktuators während der nächsten Zeiteinheit mit einer geänderten Geschwindigkeit, wobei die geänderte Geschwindigkeit in Abhängigkeit von der Restweglänge ermittelt wird.

Erfindungsgemäß wird ein Steuerverfahren vorgeschlagen, bei dem die Bewegung eines Aktuators nicht anhand von festen Umschaltpunkten, sondern in Abhängigkeit eines "Abstandes zu einem Ziel" gesteuert wird. Daher ist es erfindungsgemäß möglich sowohl auf eine geänderte Ausgangssituation am Aktuator (beispielsweise eine höhere aktuelle Geschwindigkeit) als auch auf eine geänderte Zielsituation (beispielsweise eine bewegte zweite Achse) in besonders einfacher Weise zu reagieren.

Durch die erfindungsgemäße Vorgehensweise können insbesondere Inbetriebnahmezeiten wesentlich verkürzt werden und es kann vielfach auf den Einsatz von Umrichtern mit integrierter Steuerung (wie beispielsweise IPOS oder ACOPOS) verzichtet werden.

Bei Servoumrichtern müssen vor dem Start zum Zielpunkt die genauen Koordinaten, Überschleifparameter, vorgegebene Geschwindigkeiten und dergleichen bekannt sein. Dann fahren die Achsen ohne Wenn und Aber zum vorgegebenen Zielpunkt. Eine Änderung der Koordinaten oder Parameter ist während der Fahrt nicht möglich. So können zwischenzeitliche Veränderungen der Gegebenheiten, wie vorzeitige Freigabe zum Schwenken an einem Hubwerk nicht mehr berücksichtigt werden. Kollisionsfahrten müssen im Vorhinein berechnet und berücksichtigt werden. Sie können gegebenenfalls nur durch Notstopp vermieden werden.

Bei der Steuerung mit dem erfindungsgemäßen Prinzip ist es jedoch in jedem Zyklus eines Steuerprogramms möglich auf veränderte Situationen zu reagieren. "Schwenkfreigaben" zum Beispiel werden nicht mehr freigegeben, sondern nur noch als stetig neue Zielvorgabe der zu schwenkenden Achse berechnet. Die Zielvorgabe der Achse wird also in jedem Zyklus neu definiert.

So kann man auch, wenn man bei der Zielvorgabe die Position einer anderen Achse bzw. eines anderen Aktuators berücksichtigt, ohne Probleme einer Masterachse hinterherfahren, ohne irgendeine Gefahr einer Kollisionsfahrt. Diese Anwendungen sind vielfältig und besonders vorteilhaft bei Zwischenlagereinlegern zu einem Hubwerk, bei einem Hubwerk von einem Greiferkopf zu einem Zentrierrahmen, bei zwei Verschiebewägen oder dergleichen einzusetzen.

Auch kann auf diese Art und Weise der Nachteil einer geringen Dynamik von Drehstrommotoren im Verhältnis zu einem Servoantrieb mehr als ausgeglichen werden.

Bei einer vorteilhaften Weiterbildung der Erfindung umfasst das Verfahren die Schritte: Ermitteln, ob die geänderte Geschwindigkeit kleiner als eine maximale Geschwindigkeit ist, und Bewegen des Aktuators während der nächsten Zeiteinheit mit der geänderten Geschwindigkeit, wenn die geänderte Geschwindigkeit kleiner als die maximale Geschwindigkeit ist. So wird gemäß der Erfindung z.B. der momentane Abstand zu einem Zielpunkt in Inkrementen ermittelt und dieser in eine noch zulässige Geschwindigkeit zum Erreichen des Zielpunktes umgerechnet. Ist die zulässige Geschwindigkeit kleiner als die zuvor vorgegebene Geschwindigkeit, so wird die zulässige Geschwindigkeit als Sollwert an einen Frequenzumrichter ausgegeben. Ist die zulässige Geschwindigkeit größer als die zuvor vorgegebene Geschwindigkeit, wird mit der vorgegebenen Geschwindigkeit weitergefahren.

Alternativ oder zusätzlich kann mit einer noch zulässigen Beschleunigung (in m/s²) zum Erreichen des Zielpunktes bzw. einer maximalen Beschleunigung, mit der der Aktuator bzw. Antrieb herunterregeln soll, gearbeitet werden. Ist der Abstand zum Ziel geringer, als es die Beschleunigung zulässt, so wird die Geschwindigkeit (in m/s) neu vorgegeben.

Ferner sind erfindungsgemäß bevorzugt folgende Schritte integriert: Ermitteln, ob die Restweglänge kleiner als eine Mindestweglänge ist, Bewegen des Aktuators während der nächsten Zeiteinheit mit einer geänderten Geschwindigkeit, wenn die Restweglänge kleiner als die Mindestweglänge ist.

Beim Ermitteln der geänderten Geschwindigkeit in Abhängigkeit von der Restweglänge wird die geänderte Geschwindigkeit erfindungsgemäß als ein Produkt aus der gegebenenfalls gewerteten Restweglänge und einem Faktor ermittelt. Wenn die vorgegebene Geschwindigkeit z.B. den Parameter "Abstand zum Ziel" (beispielsweise gemessen als Drehfrequenz in Hertz (Hz)) überschreitet, wird der Parameter "Abstand zum Ziel" als Sollwert an einen Frequenzumrichter übertragen. Dazu muss zuvor ein Parameter "Max-Inkremente vor Ziel" einmal eingestellt werden und der Aktuator wird gesteuert über die Formel: "Maximalgeschwindigkeit" geteilt durch "Max-Inkremente vor Ziel" ist gleich "Geschwindigkeit pro Inkrement"; "Tatsächliche Anzahl Inkremente vor Ziel" mal "Geschwindigkeit pro Inkrement" ist gleich "Abstand zum Ziel" (als Sollwertvorgabe in Hz).

Der Faktor wird daher vorteiligerweise als der Quotient aus einer maximalen Geschwindigkeit des Aktuators und der während einer Zeiteinheit mit maximaler Geschwindigkeit zurückgelegten Weglänge des Aktuators bestimmt. Dies bedeutet, dass die Funktion erst greift, wenn die Sollwertvorgabe (in Hz) höher ist als der "Abstand zum Ziel". Die Sollwertvorgabe wird bevorzugt in jedem Zyklus eines SPS-Programms neu definiert. Dies ermöglicht ein besonders gezieltes Anfahren und Abbremsen eines oder mehrerer Aktuatoren. Ferner kann, eventuell geschwindigkeitsabhängig, ein Positionierfenster vor dem Zielpunkt gesetzt werden. Die vorgegebene Geschwindigkeit (in Hz) mal einem "Faktor Positionierfenster" ist dann gleich "Inkremente zum Positionieren". Dies bedeutet, dass die Funktion greift, wenn die Geschwindigkeitsvorgabe den Parameter "Abstand zum Ziel" plus "Inkremente zum Positionieren" überschreitet. Der Weg "Inkremente zum Positionieren" wird dann mit minimaler Geschwindigkeit gefahren. Wird die Positionierfunktion nicht benötigt, kann diese durch eine "Festdrehzahl" außer Kraft gesetzt werden. Es wird dann nur die Festdrehzahl weitergegeben und es kann beispielsweise ein Antasten über eine Fotozelle (z.B. an einem Zwischenlagereinleger) erfolgen. In der Praxis kann der Faktor auch durch ein Herantasten ermittelt werden. Man dividiert eine maximale Geschwindigkeit (gemessen als Drehfrequenz in Hz) durch einen Wert in Inkrementen, der einer großen Distanz der zu fahrenden Strecke entspricht. Je geringer die Anzahl an Inkrementen, desto größer wird somit der Wert. Den Wert trägt man als Faktor ein. Dann verfährt man den Aktuator mit der maximalen Geschwindigkeits-Vorgabe unter stetiger Veränderung des Faktors so lange, bis die gewünschte Beschleunigungs- bzw. Bremskurve erreicht ist. Man hat damit die Kurve bei maximaler Geschwindigkeit ermittelt.

Auf diese Weise kann ferner eine Wegmarke definiert werden, an der der Aktuator eine vorgegebene Geschwindigkeit fahren soll. Dazu wird bevorzugt beim Ermitteln der geänderten Geschwindigkeit in Abhängigkeit von der Restweglänge die geänderte Geschwindigkeit als eine Summe aus der gegebenenfalls gewerteten Restweglänge und einem Summanden ermittelt.

Der Summand stellt bevorzugt die an der angestrebten Position angestrebte Geschwindigkeit des Aktuators dar. Es kann also auch ein Aktuator eine vorher bestimmte Strecke (Wegmarke) mit einer vorher bestimmten Geschwindigkeit fahren, ohne die vorgegebene Maximalgeschwindigkeit oder irgendwelche Umschaltpunkte in Betracht ziehen zu müssen. Die Geschwindigkeitsauswertung zum Anfangszeitpunkt der Strecke wird dazu nach dem oben beschriebenen erfindungsgemäßen Prinzip durchgeführt. Nur wird zur Auswertung die zu fahrende Geschwindigkeit (gemessen als Drehfrequenz in Hz) addiert und als Geschwindigkeit vorgeschlagen. Ist diese nun kleiner als die vorgegebene Geschwindigkeit, wird diese als Sollwert vorgegeben; ist sie größer, wird mit der vorgegebenen Geschwindigkeit gefahren. Während dem Verfahren wird die Geschwindigkeitsauswertung auf Null gesetzt und somit nur mit der vorher bestimmten Geschwindigkeit der Strecke gefahren.

Beim Ermitteln ob die Restweglänge kleiner als eine Mindestweglänge ist, wird demnach ferner bevorzugt die Mindestweglänge in Abhängigkeit von der aktuellen Geschwindigkeit bestimmt.

Auch wird vorteilhaft während der nächsten Zeiteinheit dem Aktuator eine geänderte angestrebte Position vorgegeben.

Wie ferner bereits erwähnt, wird dem Aktuator die geänderte angestrebte Position bevorzugt in Abhängigkeit von der Bewegung eines zweiten Aktuators vorgegeben. So lässt sich auch die Startbeschleunigung, wie ein Überschleifen zweier Achsen, z.B. eines Schwenkantriebes an einem Hubwerk, realisieren: Man legt ein erstes Überschleiffenster vor dem absoluten Schwenkpunkt des Hubwerkes fest, Dann legt man von der gespeicherten Istposition des Schwenkantriebes ein zweites Überschleiffenster zum Zielpunkt fest. Wenn das Hubwerk z.B. 90% in dem ersten Überschleiffenster vom absoluten Schwenkpunkt entfernt ist, zieht man diese 90% von 100% ab und erhält damit den Wert 10%. Der Schwenkantrieb bekommt dann 10% des Weges des zweiten Überschleiffensters von der gespeicherten Ist-Position als neue Zielposition vorgegebenen. Die Zielposition definiert sich somit nach jedem Zyklus des Programms neu. Ist das Hubwerk in der endgültigen Schwenkposition, wird der Zielpunkt als Zielposition vorgegeben. Die Geschwindigkeitsvorgabe des Schwenkantriebes wird währenddessen durch das vorher beschriebene erfindungsgemäße Prinzip ermittelt.

Besonders bevorzugt wird daher die geänderte angestrebte Position in einem Verhältnis zu einer angestrebten Endposition des Aktuators gewählt, wobei das Verhältnis proportional zu dem Verhältnis der aktuellen Position des zweiten Aktuators zu dessen angestrebter Endposition gewählt wird.

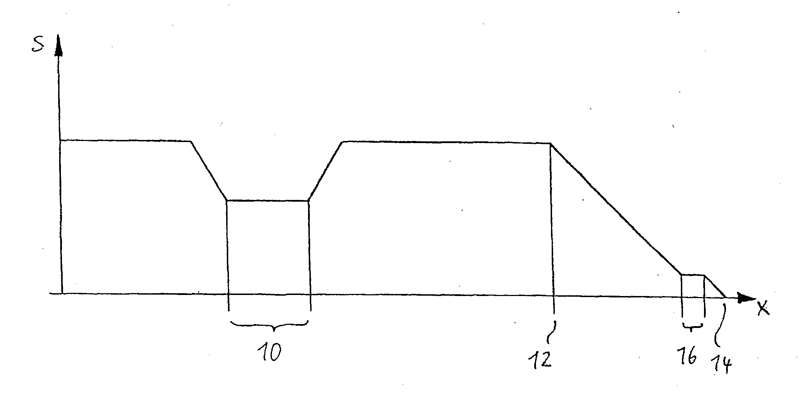

### Kurzbeschreibung der Zeichnung

Nachfolgend wird ein Ausführungsbeispiel eines erfindungsgemäßen Verfahrens anhand der beigefügten schematischen Zeichnung näher erläutert. Es zeigt:
die Fig. eine schematische Darstellung der Geschwindigkeits-Sollwertvorgabe über dem Weg bei einem erfindungsgemäßen Verfahren.

### Detaillierte Beschreibung des Ausführungsbeispiels

In der Fig. ist der mittels eines erfindungsgemäßen Verfahrens bestimmte Sollwert S der Geschwindigkeit, gemessen als Drehfrequenz in Hertz (Hz), zum Bewegen eines nicht dargestellten Aktuators über einen Weg X, gemessen in Inkrementen, dargestellt.

Die Darstellung zeigt insbesondere eine Wegmarke 10, während der der Aktuator mit einer vorgegebenen bzw. parametrisieren, konstanten Sollwertvorgabe bewegt wird.

Ferner zeigt die Darstellung bei Bezugszeichen 12 einen Parameter "Abstand zum Ziel", bei dem eine Bremsung des Aktuators entsprechend dem erfindungsgemäßen Verfahren im Hinblick auf eine angestrebte Position bzw. ein Ziel 14 einsetzt.

In den Bremszeitraum ist darüber hinaus ein Positionierfenster 16 integriert, während dem der Aktuator mit minimaler Geschwindigkeit verfahren wird.

## Patentansprüche

1. Verfahren zum Steuern der Bewegung eines Aktuators mittels eines zyklischen Steuerprogramms mit den Schritten:
Bewegen des Aktuators mit einer aktuellen Geschwindigkeit über eine aktuelle Position während einer Zeiteinheit,
Ermitteln der Restweglänge (12) zwischen der jeweils aktuellen Position des Aktuators und einer angestrebten Position (14), und
Bewegen des Aktuators während der nächsten Zeiteinheit mit einer jeweils geänderten Geschwindigkeit,
wobei die jeweils geänderte Geschwindigkeit in Abhängigkeit von der Restweglänge (12) ermittelt wird,
**dadurch gekennzeichnet, dass**
beim Ermitteln der geänderten Geschwindigkeit in Abhängigkeit von der Restweglänge (12) die geänderte Geschwindigkeit mittels einer Formel als ein Produkt aus der gegebenenfalls gewerteten Restweglänge (12) und einem Faktor ermittelt wird,
wobei während der jeweils nächsten Zeiteinheit dem Aktuator eine geänderte angestrebte Position (14) vorgegeben wird,
wobei dem Aktuator die geänderte angestrebte Position (14) in Abhängigkeit von der Bewegung eines zweiten Aktuators in jedem Zyklus vorgegeben wird.

2. Verfahren nach Anspruch 1, mit den Schritten:
Ermitteln, ob die geänderte Geschwindigkeit kleiner als eine maximale Geschwindigkeit ist, und
Bewegen des Aktuators während der nächsten Zeiteinheit mit einer geänderten Geschwindigkeit, wenn die geänderte Geschwindigkeit kleiner als die maximale Geschwindigkeit ist.

3. Verfahren nach Anspruch 1 oder 2, mit den Schritten:
Ermitteln, ob die Restweglänge (12) kleiner als eine Mindestweglänge ist, und Bewegen des Aktuators während der nächsten Zeiteinheit mit einer geänderten Geschwindigkeit, wenn die Restweglänge (12) kleiner als die Mindestweglänge ist.

4. Verfahren nach einem der Ansprüche 1 bis 3,
**dadurch gekennzeichnet, dass** beim Ermitteln der geänderten Geschwindigkeit in Abhängigkeit von der Restweglänge (12) die geänderte Geschwindigkeit als eine Summe aus der gegebenenfalls gewerteten Restweglänge und einem Summanden ermittelt wird und der Summand als die an der angestrebten Position (14) angestrebte Geschwindigkeit des Aktuators bestimmt wird.

5. Verfahren nach Anspruch 3,
**dadurch gekennzeichnet, dass** beim Ermitteln, ob die Restweglänge (12) kleiner als eine Mindestweglänge ist, die Mindestweglänge in Abhängigkeit von der aktuellen Geschwindigkeit bestimmt wird.

6. Verfahren nach einem der Ansprüche 1 bis 5,
**dadurch gekennzeichnet, dass** die geänderte angestrebte Position (14) in einem Verhältnis zu einer angestrebten Endposition des Aktuators gewählt wird, wobei das Verhältnis proportional zu dem Verhältnis der aktuellen Position des zweiten Aktuators zu dessen angestrebter Endposition gewählt wird.

## Claims

1. A method for controlling the movement of an actuator by means of a cyclic control program, having the steps:
moving the actuator at a current speed over a current position during a unit of time,
determining the residual path length (12) between the current position in each case of the actuator and a desired position (14), and
moving the actuator during the next unit of time at a speed which is changed in each case,
the speed which is changed in each case being determined dependent on the residual path length (12),
**characterised in that**
when determining the changed speed dependent on the residual path length (12) the changed speed is determined by means of a formula as a product of the optionally assessed residual path length (12) and a factor,
the actuator being prescribed a changed desired position (14) during the next unit of time in each case,
the actuator being prescribed the changed desired position (14) dependent on the movement of a second actuator in each cycle.

2. A method according to Claim 1, having the steps:
determining whether the changed speed is less than a maximum speed, and
moving the actuator during the next unit of time at a changed speed if the changed speed is less than the maximum speed.

3. A method according to Claim 1 or 2, having the steps:
determining whether the residual path length (12) is less than a minimum path length,
and moving the actuator during the next unit of time at a changed speed if the residual path length (12) is less than the minimum path length.

4. A method according to one of Claims 1 to 3,
**characterised in that** when determining the changed speed dependent on the residual path length (12) the changed speed is determined as a sum of the optionally assessed residual path length and an addend, and the addend is determined as the speed of the actuator which is desired at the desired position (14).

5. A method according to Claim 3,
**characterised in that** when determining whether the residual path length (12) is less than a minimum path length the minimum path length is determined dependent on the current speed.

6. A method according to one of Claims 1 to 5,
**characterised in that** the changed desired position (14) is selected in a relationship to a desired end position of the actuator, the relationship being selected to be proportional to the relationship of the current position of the second actuator to the desired end position thereof.

## Revendications

1. Procédé de commande du mouvement d'un actionneur au moyen d'un programme de commande cyclique, incluant les étapes consistant à :
mouvoir ledit actionneur à une vitesse effective à l'aplomb d'un emplacement instantané, durant une unité de temps,
déterminer la longueur de course restante (12), entre l'emplacement respectivement instantané de l'actionneur et un emplacement de consigne (14), et
mouvoir ledit actionneur, durant l'unité de temps successive, à une vitesse respectivement modifiée,
ladite vitesse respectivement modifiée étant déterminée en fonction de ladite longueur de course restante (12),
**caractérisé par le fait que**,
lors de la détermination de la vitesse modifiée en fonction de la longueur de course restante (12), ladite vitesse modifiée est déterminée au moyen d'une formule représentant le produit d'un facteur et de ladite longueur de course restante (12), évaluée le cas échéant,
sachant que, durant l'unité de temps respectivement successive, un emplacement de consigne (14) modifié est préétabli à l'adresse de l'actionneur,
ledit emplacement de consigne (14) modifié étant préétabli, à l'adresse dudit actionneur, en fonction du mouvement d'un second actionneur au cours de chaque cycle.

2. Procédé selon la revendication 1, incluant les étapes consistant à :
déterminer si la vitesse modifiée est inférieure à une vitesse maximale, et
mouvoir l'actionneur à une vitesse modifiée, durant l'unité de temps successive, lorsque ladite vitesse modifiée est inférieure à ladite vitesse maximale.

3. Procédé selon la revendication 1 ou 2, incluant les étapes consistant à :
déterminer si la longueur de course restante (12) est inférieure à une longueur de course minimale, et
mouvoir l'actionneur à une vitesse modifiée, durant l'unité de temps successive, lorsque ladite longueur de course restante (12) est inférieure à ladite longueur de course minimale.

4. Procédé selon l'une des revendications 1 à 3,
**caractérisé par le fait que**, lors de la détermination de la vitesse modifiée en fonction de la longueur de course restante (12), ladite vitesse modifiée est déterminée comme une somme d'un opérande et de ladite longueur de course restante, évaluée le cas échéant, ledit opérande étant défini comme la vitesse de l'actionneur recherchée à l'emplacement de consigne (14).

5. Procédé selon la revendication 3,
**caractérisé par le fait que**, lors de la détermination visant à établir si la longueur de course restante (12) est inférieure à une longueur de course minimale, ladite longueur de course minimale est définie en fonction de la vitesse effective.

6. Procédé selon l'une des revendications 1 à 5,
**caractérisé par le fait que** l'emplacement de consigne (14) modifié est sélectionné suivant un rapport avec un emplacement extrême de consigne de l'actionneur, ledit rapport étant sélectionné proportionnellement au rapport entre l'emplacement instantané du second actionneur et un emplacement extrême de consigne de ce dernier.
